# EUROPÄISCHE PATENTSCHRIFT

(11) **EP 1 192 004 B1**
(45) Veröffentlichungstag und Bekanntmachung des Hinweises auf die Patenterteilung: **13.10.2004**
(21) Anmeldenummer: 00938698.8
(22) Anmeldetag: 29.05.2000
(51) Int. Cl.: B01J 35/04, B01J 35/02, C22C 38/18, C22C 38/06

(54) **KATALYSATOR-TRÄGERKÖRPER FUR ZWEIRADANWENDUNGEN**
CATALYST SUPPORT BODY FOR TWO-WHEELED VEHICLES
CORPS SUPPORT DE CATALYSEUR DESTINE AUX VEHICULES AYANT DEUX ROUES

(30) Priorität: 02.06.1999 DE 19925390
(43) Veröffentlichungstag der Anmeldung: 03.04.2002
(73) Patentinhaber: Emitec Gesellschaft für Emissionstechnologie mbH, 53797 Lohmar (DE)
(72) Erfinder: WIERES, Ludwig, D-51491 Overath (DE)
(74) Vertreter: Kahlhöfer, Hermann, Dipl.-Phys.
(86) Internationale Anmeldenummer: PCT/EP2000/004885
(87) Internationale Veröffentlichungsnummer: WO 2000/074849

(56) Entgegenhaltungen:
- EP-A- 0 232 793
- EP-A- 0 497 992
- EP-A- 0 861 916
- WO-A-92/09365
- DE-A- 3 823 239

## Beschreibung

Die vorliegende Erfindung betrifft einen aus geschichteten oder gewickelten Blechlagen hergestellten Wabeakörper, wie er insbesondere als Katalysator-Trägerkörper für Abgasreinigungsanlagen Anwendung findet. Solche Wabenkörper sind typischerweise aus abwechselnden Lagen von glatten und gewellten Blechen oder aus abwechselnden Lagen unterschiedlich strukturierter Bleche durch Wickeln oder Schichten hergestellt. Solche Wabenkörper sind beispielsweise in der WO 94/13939 beschrieben.

Da in Abgasanlagen von Verbrennungsmotoren typischerweise hohe Temperaturen und eine korrosive Umgebung herrschen, wurden als Materialien für solche Wabenkörper bisher im wesentlichen hochtemperaturkorrsionsfeste Legierungen, d. h. Stahllegierungen mit hohem Chrom- und Aluminiumgehalt eingesetzt.

Obwohl allgemein bekannt ist, daß sich rostfreie Stähle mit zunehmendem Aluminiumgehalt immer schwerer verarbeiten lassen, so daß während des Walzprozesses das Material immer wieder geglüht werden muß, zeichnete sich eine Entwicklung hin zu höheren Aluminiumgehalten in metallischen Wabenkörpern ab. Dies läßt sich beispielsweise schon aus der US 4,602,001 entnehmen, wobei dort versucht wird, die schwere Verarbeitbarkeit von Stahl mit hohem Aluminiumgehalt dadurch zu kompensieren, daß das Aluminium erst später durch zusätzliche Aluminiumschichten und Diffusion hinzugefügt wurde.

Auch aus der DE 44 10 744 ist eine Tendenz zu hohen Aluminiumgehalten erkennbar, auch wenn dort die elektrischen Eigenschaften im Vordergrund stehen. Aus der EP 0 497 992 A1 sind Bleche für einen katalysator trägerkörper mit einem Aluminium gehalt von 1 bis 20 % bekannt.

Gleichzeitig ist auch eine Entwicklung hin zu dünneren Blechlagen erkennbar, da eine geringere Masse in einem Katalysator-Trägerkörper das Kaltstartverhalten günstig beeinflußt und dünne Wände einen geringeren Druckverlust verursachen. Je dünner jedoch die Blechlagen werden, desto ungünstiger wird das Verhältnis von vorhandenem Aluminium zur Oberfläche, welches für die Langzeit-Korrosionsbeständigkeit der Blechlagen entscheidend ist. Dies erklärt die Tendenz zu steigenden Aluminiumgehalten bei dünneren Folien, obwohl dadurch die Walzprozesse erheblich erschwert werden.

Die Tendenz zu immer dünneren Metallblechen in Wabenkörpern ist beispielsweise auch aus der DE 44 18 630 zu entnehmen.

Inzwischen hat sich jedoch herausgestellt, daß es besondere Anwendungsfälle für metallische Wabenkörper gibt, bei denen die obigen Überlegungen nicht zutreffen. Es sind dies insbesondere Anwendungen für die Abgasanlagen von Zweirädern, in denen so große mechanische Belastungen auftreten, daß dickere Folien eingesetzt werden müssen. Außerdem gibt es Anwendungen für metallische Wabenkörper in Abgasreinigungsanlagen von Dieselmotoren, in denen sehr viel geringere Temperaturen herrschen als in den Abgassystemen von Otto-Motoren. Für beide Anwendungsfälle sind daher die generellen Überlegungen für andere Anwendungsfälle von Wabenkörpern nicht unbedingt zutreffend.

Aufgabe der vorliegenden Erfindung ist es, gerade für diese Anwendungsfälle geeignete, besonders preisgünstig herstellbare Wabenkörper anzugeben.

Diese Aufgabe wird durch einen Wabenkörper gemäß dem Anspruch 1 insbesondere für Abgasreinigungsanlagen von Zweirädern gelöst. Vorteilhaft Ausgestaltungen sind in den jeweils abhängigen Ansprüchen angegeben.

Neuere Entwicklungen bei der Herstellung von Metallblechen mit hohen Aluminiumgehalten basieren auf mehrstufigen Verfahren, bei denen zunächst Stahlblech mit geringerem Aluminiumgehalt bis zu einer bestimmten Dicke heruntergewalzt wird, wobei anschließend in einem zweiten Verfahrensteil der Aluminiumgehalt erhöht und die endgültige Dicke erreicht wird. Die Erhöhung des Aluminiumgehaltes kann durch das Aufwalzen von Aluminiumfolie oder durch Feueraluminieren oder auch durch Aluminiumtauchverfahren erreicht werden. Im Zuge solcher Herstellungsprozesse wurden Walzverfahren entwickelt, die Stähle mit einem Aluminiumgehalt von maximal 4,5 % relativ kostengünstig walzen können, insbesondere ohne häufiges Zwischenglühen.

Die vorliegende Erfindung macht sich nun die Erkenntnis zu Nutze, daß solche Materialien trotz eines Aluminiumgehaltes unter 4,5 oder sogar unter 4 % genügend hochtemperaturkorrosionsbeständig sind, wenn sie in Wabenkörpern mit einer Dicke der Blechlagen von mehr als 0,06 mm, vorzugsweise mehr als 0,08 mm eingesetzt werden. Bei so dicken Blechlagen ist das Verhältnis des insgesamt vorhandenen Aluminiums zur Oberfläche bei 3 oder 4 % Aluminiumgehalt sogar besser als bei Blechlagen einer Dicke von beispielsweise 0,03 mm und einem Aluminiumgehalt von 6 %. Da Aluminium bei hohen Temperaturen in Stahl sehr schnell diffundiert, gelangt auch bei geringeren Aluminiumgehalten in dicken Blechlagen genügend Aluminium an die Oberfläche, um dort eventuelle Schäden in der schützenden Oxydschicht durch Neubildung von Aluminiumoxyd auszugleichen.

Für Blechlagen mit einer Dicke über 0,06 mm ergibt sich eine Näherungsformel, nach der der Aluminiumgehalt (in Gewichtsprozent) zwischen 6 und 12 %, insbesondere zwischen 8 und 10 %, multipliziert mit 0,02 mm dividiert durch die Dicke der Blechlagen liegen sollte. Auf diese Weise ist das Verhältnis von insgesamt vorhandenem Aluminium zur Oberfläche in diesen Blechen immer günstiger als in einem Blech von 0,02 mm Dicke und 6 % Aluminiumgehalt.

Die hohen mechanischen Belastungen in Abgasreinigungsanlagen von Zweirädern und einige Anwendungsfälle machen es erforderlich, dort Bleche von einer Dicke zwischen 0,08 und 0,12 mm einzusetzen. Für diese Anwendungsfälle eignen sich daher Bleche mit einem Aluminiumgehalt von 1 bis 4,5 %. Typischerweise weisen solche Stahlbleche einen Chromgehalt von 15 bis 25 % und einen gewissen Anteil an seltenen Erden auf, wobei für diese und andere Anteile in rostfreien Stählen auch im vorliegenden Falle die bekannten Bedingungen gelten.

Natürlich lassen sich mit dickeren Blechlagen keine ganz feinen Strukturen herstellen, so daß die erfindungsgemäßen Wabenkörper typischerweise zwischen 31 und 93 Zellen pro Quadrat zentimeter (200 bis 600 cpsi, cells per square inch) aufweisen.

Ein besonderer wirtschaftlicher Vorteil der vorliegenden Erfindung liegt darin, daß das Material für Katalysator-Trägerkötper für Zweiräder aus einem anderen Produktionsprozeß abgezweigt werden kann. Dies erlaubt es, selbst bei geringeren Mengen des benötigten Materials, dieses sehr wirtschaftlich verfügbar zu machen. Eine gesonderte Herstellung bestimmter Schmelzen und das Walzen von Spezialfolien für relativ kleine Stückzahlen von Abgasreinigungsanlagen von Zweirädern ließe sich nicht in ähnlicher Weise wirtschaftlich durchführen. Da jedoch rostfreie Stähle mit einem Aluminiumgehalt von 1 bis 4,5 % für die oben erwähnten mehrstufigen Prozesse mit späterer Erhöhung des Aluminiumgehaltes ohnehin benötigt werden, ergibt sich die Möglichkeit, einen Teil dieses Materials direkt für die Herstellung von Wabenkörpern zu verwenden, zumal es mit einer geeigneten Dicke als Zwischenprodukt vor der Erhöhung des Aluminiumgehaltes ohnehin hergestellt wird.

Eine ähnliche Überlegung gilt für Abgasreinigungsanlagen von Dieselfahrzeugen. In diesen Anlagen herrschen weit geringere Temperaturen als in den Abgasreinigungsanlagen von Otto-Motoren, so daß aus diesem Grunde ein geringerer Aluminiumgehalt und die damit verbundene geringere Hochtemperaturkorrosionsbeständigkeit toleriert werden kann. Hier brauchen die Bleche zwar aus mechanischen Gründen nicht so dick zu sein wie bei Zweirädern, jedoch wird auch kein so hohes Verhältnis von Gesamtaluminiumgehalt zur Oberfläche benötigt. Die wie oben beschrieben aus einem Produktionsprozeß abgezweigten Folien mit Aluminiumgehalten zwischen 1 und 4,5 % können daher weiter heruntergewalzt werden bis zu einer geeigneten Dicke von beispielsweise 0,03 bis 0,06 mm und dann trotz des geringeren Aluminiumgehaltes problemlos in Abgasreinigungsanlagen von Dieselfahrzeugen eingesetzt werden. Auch hier entsteht ein enormer wirtschaftlicher Vorteil durch die Vermeidung gesonderter Herstellungsprozesse.

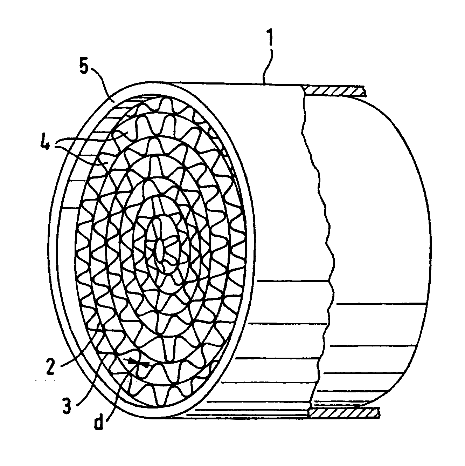

Zur Veranschaulichung der vorliegenden Erfindung ist ein typischer metallischer Katalysator-Trägerkörper in der Zeichnung dargestellt.

In einem Mantelrohr, 5 befindet sich ein aus glatten 2 und gewellten 3 Blechlagen hergestellter Wabenkörper 1, dessen Bleche eine Dicke d von 0,08 bis 0,12 mm aufweisen. Die Blechlagen 2, 3 formen von Abgas durchströmbare Kanäle 4 vorzugsweise von einer solchen Größe, daß der Wabenkörper zwischen 31 und 93 Zellen pro Quadrat zentimeter (200 bis 600 cpsi, cells per square inch) aufweist. Die Blechlagen bestehen aus einem Edelstahl mit 15 bis 25 Gewichtsprozent Chrom vorzugsweise 18 bis 22 %, typischen Anteilen bestimmter seltener Erden wie sie zur Erhöhung der Korrosionsbeständigkeit bekannt sind und einen Aluminiumgehalt von 1 bis 4,5 %, insbesondere 2 bis 4 %.

Die vorliegende Erfindung erlaubt die besonders kostengünstige Herstellung qualitativ an die Umgebungsbedingungen angepaßter Katalysator-Trägerkörper für Abgasreinigungsanlagen von Zweirädem.

### Bezugszeichenliste

- 1: Wabenkörper
- 2: glatte Blechlage
- 3: gewellte Blechlage
- 4: Kanäle
- 5: Mantelrohr
- d: Dicke der Blechlagen

## Patentansprüche

1. Wabenkörper (1), insbesondere Katalysator-Trägerkörper für Abgasreinigungsanlagen von Zweirädem, aus geschichteten oder gewickelten Blechlagen (2, 3), welche zumindest in Teilbereichen so strukturiert sind, daß sie von Abgas durchströmbare Kanäle (4) bilden, wobei die Blechlagen (2, 3) aus einem Edelstahl bestehen, eine Dicke von mehr ais 0,08 mm aufweisen und einen Aluminiumgehalt in Gewichtsprozent haben, der zwischen 6 und 12 % multipliziert mit 0,02 mm dividiert durch die Dicke (d) der Blechlagen (2, 3) liegt.

2. Wabenkörper (1) nach Anspruch 1, **dadurch gekennzeichnet, daß** die Dicke (d) der Blechlagen (2,3) 0,08 bis 0,12 mm beträgt.

3. Wabenkörper (1) nach Anspruch 1 oder 2, **dadurch gekennzeichnet, daß** die Anzahl der Kanäle (4) in dem Wabenkörper (1) zwischen 31 und 93 Zellen pro Quadrat zentimeter (200 und 600 cpsi, cells per square inch) beträgt.

4. Wabenkörper (1) nach einem der vorhergehenden Ansprüche, **dadurch gekennzeichnet, daß** der Aluminiumgehalt 2 bis 4 % beträgt.

5. Wabenkörper (1) nach einem der vorhergehenden Ansprüche, **dadurch gekennzeichnet, daß** die Blechlagen (2, 3) durch Walzen hergestellt sind, insbesondere aus einem Produktionsprozeß zur Herstellung von feueraluminiertem Material vor einer Erhöhung des Aluminiumgehaltes entnommen sind.

## Claims

1. A honeycomb body (1), in particular a catalyst carrier body for exhaust-cleaning systems of motorcycles, comprising stacked or wound sheet-metal layers (2, 3) which, at least in partial regions, are structured in such a way that they form passages (4) through which exhaust gas can flow, the sheet-metal layers (2, 3) consisting of a stainless steel, being more than 0.08 mm thick and having an aluminum content in percent by weight which is between 6 and 12% multiplied by 0.02 mm divided by the thickness (d) of the sheet-metal layers (2, 3).

2. The honeycomb body (1) as claimed in claim 1, **characterized in that** the thickness (d) of the sheet-metal layers (2, 3) is 0.08 to 0.12 mm.

3. The honeycomb body (1) as claimed in claim 1 or 2 **characterized in that** the number of passages (4) in the honeycomb body (1) is between 31 and 93 cells per square centimetre (200 and 600 cpsi, cells per square inch).

4. The honeycomb body (1) as claimed in one of the preceding claims, **characterized in that** the aluminum content is 2 to 4%.

5. The honeycomb body (1) as claimed in one of the preceding claims, **characterized in that** the sheet-metal layers (2, 3) are produced by rolling, in particular are taken from a production process for the production of hot-dip aluminized material before the aluminum content is raised.

## Revendications

1. Corps en nids d'abeilles (1), notamment un corps support de catalyseur pour des installations d'épuration de gaz d'échappement de motocycles comprenant des couches de tôle (2, 3) empilées ou enroulées, qui au moins dans des régions partielles sont structurées de telle façon qu'elles forment des canaux (4) pouvant être parcourus par du gaz d'échappement, dans quel cas les couches de tôle (2, 3) sont constituées d'un acier fin, ont une épaisseur de plus de 0,08 mm et ont une teneur en aluminium en pourcentage en poids qui se trouve entre 6 et 12 % multiplié par 0,02 mm divisé par l'épaisseur (d) des couches de tôle (2, 3).

2. Corps en nids d'abeilles (1) selon la revendication 1, **caractérisé en ce que** l'épaisseur (d) des couches de tôle (2, 3) comporte 0,08 à 0,12 mm.

3. Corps en nids d'abeilles (1) selon la revendication 1 ou 2, **caractérisé en ce que** le nombre des canaux (4) dans le corps en nids d'abeilles (1) comporte entre 31 et 93 cellules par centimètre carré (200 et 600 cpsi, cells per square inch).

4. Corps en nids d'abeilles (1) selon l'une des revendications précédentes, **caractérisé en ce que** la teneur en aluminium comporte 2 à 4 %.

5. Corps en nids d'abeilles (1) selon l'une des revendications précédentes, **caractérisé en ce que** les couches de tôle (2, 3) sont fabriquées par laminage, sont notamment prises d'un procès pour la fabrication de matériau aluminé à chaud, avant que la teneur en aluminium soit augmentée.
